# FASCICULE DE BREVET EUROPEEN

(11) **EP 0 755 879 B1**
(45) Date de publication et mention de la délivrance du brevet: **05.01.2000**
(21) Numéro de dépôt: 96401617.4
(22) Date de dépôt: 19.07.1996
(51) Int. Cl.: B65D 83/14, G01G 17/04

(54) **Dispositif pour stocker un produit liquide ou pâteux et pour délivrer une quantitité déterminée de ce produit**
Vorrichtung zur Lagerung eines flüssigen oder pastösen Produkts und zur dosierten Abgabe desselben
Device to store a liquid or pasty product and to dispense a metered quantity of such product

(30) Priorité: 20.07.1995 FR 9508797
(43) Date de publication de la demande: 29.01.1997
(73) Titulaire: L'OREAL, 75008 Paris (FR)
(72) Inventeur: Esclar, Dominique, 08360 Herpy l'Arlesienne (FR); Leitman, Franck, 93290 Tremblay en France (FR); Gaubert, Michel, 95190 Goussainville (FR)
(74) Mandataire: Leszczynski, André

(56) Documents cités:
- US-A- 4 013 194
- US-A- 5 007 560

## Description

La présente invention concerne un dispositif pour stocker un produit liquide ou pâteux et pour délivrer une quantité déterminée de ce produit.

Pour conserver les produits à l'abri de l'air et en prélever certaines quantités de manière sporadique, par exemple dans un laboratoire, la méthode conventionnelle consiste à stocker les produits dans des récipients étanches, et chaque fois que nécessaire, à ouvrir un des récipients pour y effectuer des prélèvements à l'aide par exemple d'une pipette stérile.

Cette méthode présente l'inconvénient d'être fastidieuse et de ne pas garantir une bonne conservation des produits du fait que, bien que la pipette soit stérile, l'ouverture du récipient met le produit au contact de l'air ambiant, ce qui peut entraîner sa contamination.

Pour éviter cet inconvénient, on a déjà proposé des dispositifs de stockage et de prélèvements du type comprenant un caisson étanche apte à recevoir un récipient contenant un produit, et une pluralité de tels récipients, dimensionnés en conséquence, et contenant chacun un produit à conserver.

Chaque récipient est ouvert à sa partie supérieure où il comporte un bouchon traversé par un tube plongeur qui plonge dans le produit et débouche à l'extérieur du récipient et du caisson.

L'intérieur du récipient est en outre en communication avec l'intérieur du caisson par un passage d'air situé, dans le récipient, au-dessus du niveau du produit.

Lorsque l'intérieur du caisson est mis sous pression, le produit contenu dans le récipient subit cette pression et s'échappe par le tube plongeur.

Un tel dispositif de stockage et de prélèvements donne entière satisfaction du point de vue de la conservation des produits car le prélèvement d'un produit n'entraîne aucune mise en contact du produit stocké avec l'extérieur, la seule matière apportée au voisinage du produit étant de l'air comprimé injecté dans le caisson dont on assure facilement la stérilité.

Cependant, ce dispositif de prélèvement connu ne procure pas une grande fiabilité quant à la quantité de produit prélevée dans le récipient.

La présente invention vise à résoudre notamment ce problème.

La présente invention a pour objet un dispositif pour stocker un produit liquide ou pâteux et pour délivrer une quantité déterminée de ce produit, comportant au moins un récipient pour contenir le produit, ouvert à sa partie supérieure, un bouchon pour obturer le récipient, un tube plongeur traversant le bouchon, plongeant dans le produit et débouchant à l'extérieur du récipient, et un caisson étanche apte à recevoir le récipient avec communication de l'intérieur du récipient avec l'intérieur du caisson pour soumettre le produit à une pression supérieure à la pression régnant à l'extérieur du caisson de manière que le prélèvement du produit s'effectue sans mise en contact du produit stocké dans le récipient avec l'extérieur, caractérisé par le fait que le fond du caisson comprend un organe de pesée qui mesure le poids du récipient lorsque ce dernier est placé dans le caisson étanche.

Ainsi on comprend que, par mesure du poids du récipient, on peut déterminer la quantité de produit qui en a été expulsée, par mise sous pression du caisson étanche.

De cette manière, on sait de façon précise et à tout instant quelle quantité de produit a été prélevée dans le récipient.

Dans un mode de réalisation avantageux de l'invention, l'organe de pesée est relié à un système de commande d'un moyen de mise sous pression du caisson étanche, ledit système de commande effectuant une comparaison entre la variation de poids du récipient et une valeur de consigne correspondant à une quantité prédéterminée de produit à prélever dans le récipient, et interrompant la mise sous pression du caisson étanche lorsque la variation de poids du récipient a atteint cette valeur de consigne.

Dans ce mode de réalisation, le prélèvement d'une quantité déterminée de produit s'effectue automatiquement, ce qui évite de prélever trop de produit par rapport à la quantité strictement désirée.

En outre, cette opération automatique est particulièrement adaptée à l'intégration du dispositif selon l'invention dans un système automatisé de distribution de produits comportant une pluralité de récipients fermés chacun par un bouchon, un caisson étanche commun à tous les récipients et un bras manipulateur apte à saisir un récipient contenant un produit voulu, à l'introduire dans le caisson pour l'opération de prélèvement du produit proprement dite, et à le saisir dans le caisson pour le ranger à son emplacement initial.

Pour faciliter l'introduction du récipient dans le caisson étanche, notamment lorsque cette introduction est effectuée de façon automatique par un bras manipulateur, et dans un mode de réalisation particulier de l'invention, le caisson étanche est ouvert à sa partie supérieure et le fond du caisson étanche est solidaire d'un moyen de levage, tel qu'un vérin pneumatique, apte à élever le fond du caisson au voisinage de l'ouverture de ce dernier.

Ainsi, en position d'attente, le fond du caisson étanche se situe sensiblement à la hauteur de l'ouverture du caisson étanche et peut ainsi recevoir un récipient simplement déposé par un utilisateur ou par un bras manipulateur.

L'introduction du récipient dans le caisson étanche s'effectue alors par descente du fond du caisson étanche sous l'action du moyen de levage.

Lorsque l'opération de prélèvement est achevée, le récipient est extrait du caisson étanche par élévation du fond du caisson étanche.

Il peut alors être à nouveau saisi par l'utilisateur ou par un bras manipulateur.

Dans un mode de réalisation particulier de l'invention, le bouchon est monté sur le récipient avec un jeu axial de telle sorte que le bouchon est libre de s'écarter légèrement du récipient en libérant ainsi un passage d'air entre l'intérieur et l'extérieur du récipient.

Avantageusement, le tube plongeur repose sur le fond du récipient lorsque le bouchon ferme le récipient et est écarté du fond du récipient lorsque le bouchon est écarté du récipient.

Dans un tel cas, l'étanchéité du récipient est assurée lorsque le bouchon obture le récipient par le fait que le tube plongeur, prenant appui contre le fond du récipient, est ainsi obturé.

Lorsque le bouchon est écarté du récipient, il se crée un passage d'air entre l'ouverture du récipient et le bouchon, le tube plongeur étant également libéré.

Dans un mode de réalisation particulier de l'invention, le caisson étanche est ouvert à sa partie supérieure et le bouchon est dimensionné de manière à refermer le caisson étanche lorsqu'il est placé sur le récipient, ce dernier étant introduit dans le caisson étanche.

Ce mode de réalisation présente l'avantage de simplifier considérablement le mode de fermeture du caisson étanche, ce qui facilite l'automatisation du prélèvement d'un produit.

Avantageusement, dans ce mode de réalisation, le caisson étanche est dimensionné de manière à ce que le bouchon s'écarte du récipient en prenant appui sur le caisson étanche lorsque le récipient repose sur le fond du caisson étanche.

Ainsi, on assure non seulement la fermeture du caisson étanche mais également, et ce, de manière automatique, l'ouverture du récipient, par simple introduction du récipient dans le caisson étanche.

Dans le but de mieux faire comprendre l'invention, on va en décrire maintenant un mode de réalisation donné à titre d'exemple non limitatif, en référence au dessin annexé dans lequel :
- la figure 1 est une vue en coupe axiale d'un dispositif selon l'invention, et
- la figure 2 est une vue analogue à la figure 1, le récipient étant introduit dans le caisson étanche.

Le dispositif représenté sur le dessin comporte un récipient 1, en verre, qui comporte une ouverture 2 à sa partie supérieure, délimitée par un col 3.

Un bouchon 4 est placé sur le col 3 du récipient pour obturer son ouverture 2.

Le bouchon 4 comprend deux parties, à savoir, un couvercle 5 qui recouvre le récipient 1 et un manchon 6 engagé autour du col 3 du récipient.

Le couvercle 5 comporte une jupe 5a qui s'engage autour du manchon 6.

Le manchon 6 comporte deux tétons 7 diamétralement opposés dirigés vers l'extérieur, qui pénètrent dans des gorges axiales 8 ménagées dans la jupe 5a du couvercle.

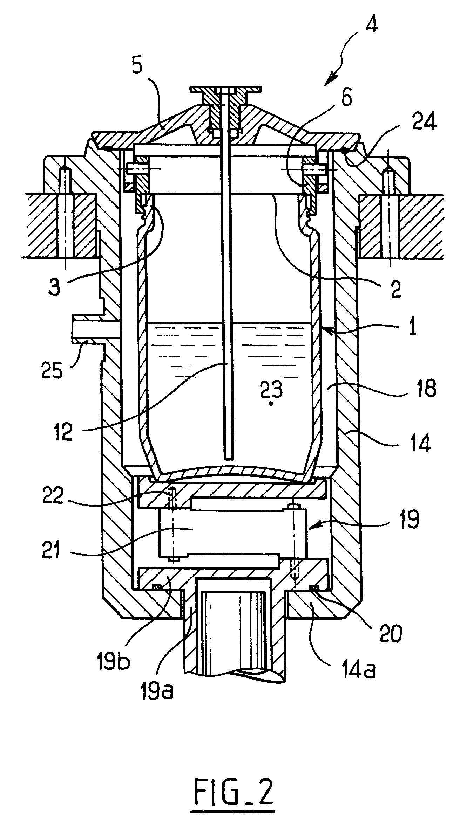

Le couvercle 5 est ainsi monté sur le manchon 6 avec un jeu axial permettant audit couvercle de s'écarter du manchon, comme on le voit sur la figure 2.

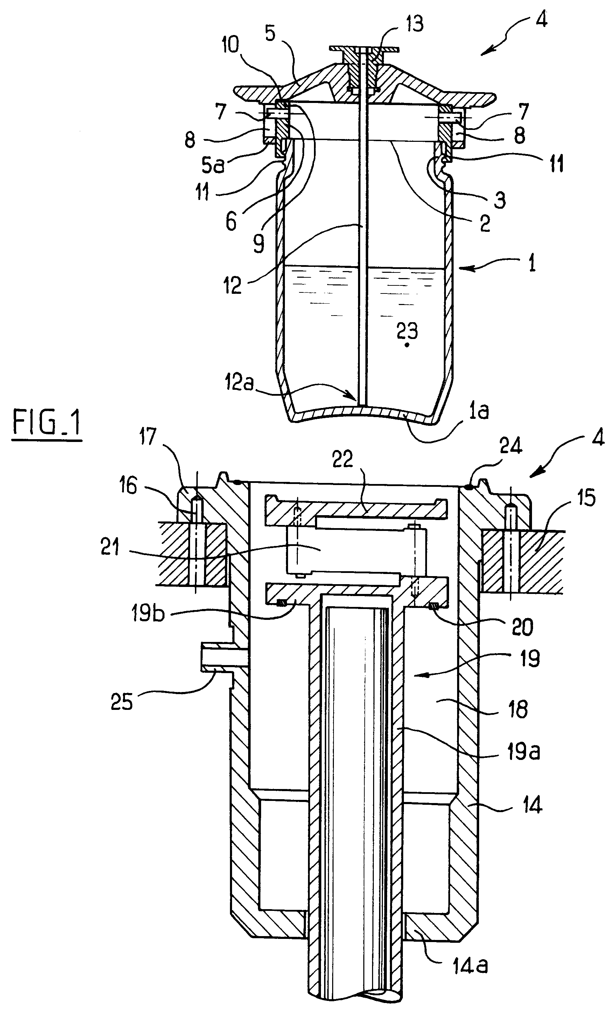

En position fermée, représentée sur la figure 1, l'étanchéité du couvercle 5 est assurée par mise en contact du bord supérieur 9 du manchon 6 avec une surface d'appui annulaire correspondante 10 prévue sur la face inférieure du couvercle 5, la force d'appui entre le bord 9 et la surface 10 résultant uniquement du poids du couvercle 5.

Le manchon 6 est par ailleurs encliqueté à sa partie inférieure sur le col 3, lequel comporte à cet effet des nervures extérieures 11.

Un tube plongeur 12 traverse le bouchon 4, duquel il est solidaire par l'intermédiaire d'un embout 13 immobilisé dans un logement prévu dans la partie centrale de la face supérieure du couvercle 5.

La hauteur du tube plongeur 12 est telle que l'extrémité 12a de ce dernier repose sur la paroi de fond 1a du récipient lorsque le couvercle 4 est fermé, comme représenté à la figure 1.

Ainsi, l'obturation du tube plongeur 12 est obtenue par simple mise en contact de son extrémité inférieure 12a contre la paroi de fond du récipient 1.

L'embout 13 est agencé pour recevoir l'extrémité d'une conduite ou d'un récipient externe (non représentée) destiné à recevoir le produit prélevé dans le récipient 1.

Le caisson étanche 14 est assujetti à un plan de travail 15 par sa collerette supérieure 17 qui est solidarisée audit plan de travail 15 par des fixations 16.

Le caisson étanche 14 comporte une cavité intérieure 18 pourvue d'un fond 19 qui évolue axialement, sous l'action d'un moyen de levage tel qu'un vérin pneumatique (non représenté), entre une position haute et une position basse.

Ce fond 19 comprend une tige 19a, terminée à sa partie supérieure par un premier plateau 19b.

La face inférieure du premier plateau 19b comporte une gorge dans laquelle est logé un joint d'étanchéité 20 qui assure l'étanchéité du caisson 14 lorsque le fond 19 se trouve en position basse, comme représenté à la figure 2.

Un capteur dynamométrique 21 est fixé au premier plateau 19b et supporte lui-même un second plateau 22, apte à supporter le récipient 1.

L'ensemble constitué par les deux plateaux 19b et 22 et par le capteur dynamométrique 21 constitue un organe de pesée apte à mesurer en permanence le poids du récipient 1 posé sur le fond 19 du caisson.

Le dispositif s'utilise de la façon suivante.

Pour prélever une quantité donnée d'un produit liquide 23 contenu dans le récipient 1, quantité qui est exprimée en masse, on dépose le récipient 1 sur le plateau 22, le fond 19 se trouvant en position haute, comme représenté à la figure 1.

Le moyen de levage est ensuite actionné pour faire descendre en position basse le fond 19 qui entraîne le récipient à l'intérieur du caisson, comme représenté à la figure 2.

Lorsque la face inférieure du premier plateau 19b se trouve au contact de la paroi inférieure 14a du caisson, le fond 19 se trouve en position basse et le joint 20 assure l'étanchéité du caisson à sa partie inférieure.

Le couvercle 5 du bouchon 4 vient alors prendre appui contre le bord supérieur 24 du caisson, en assurant ainsi l'étanchéité dudit caisson à sa partie supérieure.

Des organes de maintien (non représentés), par exemple à commande pneumatique, sont ensuite actionnés pour verrouiller le couvercle 5 dans cette position.

On voit, sur la figure 2, que, le fond 19 se trouvant en position basse, le récipient 1 est écarté du couvercle 5.

Plus précisément, le manchon 6 qui est solidaire du col 3 du récipient descend avec ce dernier dans le caisson, tandis que la descente du couvercle 5 est limitée du fait que ce dernier prend appui contre le bord supérieur 24 du caisson étanche.

Il en résulte un écartement du couvercle 5 par rapport au manchon 6, ce qui est rendu possible par le fait que les tétons 7 sont libres de coulisser à l'intérieur des gorges 8.

Cet écartement crée un passage d'air entre l'intérieur du récipient 1 et la cavité 18.

Par conséquent, lorsque l'on injecte de l'air comprimé par l'orifice 25 dans la cavité 18, le produit liquide 23 subit une surpression et s'échappe du récipient par le tube plongeur 12.

On peut noter que les parois du récipient 1 demeurent en équilibre de pression dans le caisson, de sorte qu'elle peuvent supporter des pressions élevées nécessaires en cas de forte viscosité du produit 23.

Durant cette opération, le récipient 1 et le produit liquide 23 sont pesés en permanence par l'organe de pesée 19b,21,22, de sorte que la quantité de produit qui est expulsée du récipient peut être déterminée en calculant la variation de poids du récipient.

Un système de commande (non représenté) d'un moyen de mise sous pression du caisson étanche 14, par exemple une vanne reliée à un réservoir d'air comprimé stérile, peut être relié à l'organe de pesée.

Un tel système de commande effectue une comparaison entre la variation du poids du récipient 1 et une valeur de consigne correspondant à une quantité prédéterminée de produit à prélever.

Lorsque la variation de poids du récipient a atteint cette valeur de consigne, le système de commande interrompt la mise sous pression du caisson étanche 14 de manière à stopper l'expulsion du produit 23 par le tube plongeur 12.

Ainsi, on peut effectuer un prélèvement d'un quantité précise de produit, et ce, de manière entière automatique.

On peut noter que du fait que le couvercle est verrouillé contre le bord supérieur du caisson, et du fait que le tube plongeur est solidaire du couvercle, l'organe de pesée ne subit en aucune manière l'action d'éventuelles forces qui pourraient perturber la mesure en s'exerçant sur le couvercle, du fait de la présence d'une conduite ou de l'extrémité d'un récipient engagé dans l'embout 13.

Il est bien entendu que le mode de réalisation qui vient d'être décrit ne présente aucun caractère limitatif et qu'il pourrait recevoir toutes modifications désirables sans sortir pour cela du cadre de l'invention.

## Revendications

1. Dispositif pour stocker un produit liquide ou pâteux et pour délivrer une quantité déterminée de ce produit, comportant au moins un récipient (1) pour contenir le produit, ouvert à sa partie supérieure, un bouchon (4) pour obturer le récipient (1), un tube plongeur (12) traversant le bouchon (4), plongeant dans le produit et débouchant à l'extérieur du récipient (1), et un caisson étanche (14) apte à recevoir le récipient (1) avec communication de l'intérieur du récipient (1) avec l'intérieur du caisson (14) pour soumettre le produit à une pression supérieure à la pression régnant à l'extérieur du caisson étanche de manière que le prélèvement du produit s'effectue sans mise en contact du produit stocké dans le récipient (1) avec l'extérieur, caractérisé par le fait que le fond (19) du caisson étanche (14) comprend un organe de pesée (19b,21,22) qui mesure le poids du récipient (1) lorsque ce dernier est placé dans le caisson étanche (14).

2. Dispositif selon la revendication 1, caractérisé par le fait que l'organe de pesée (19b,21,22) est relié à un système de commande d'un moyen de mise sous pression du caisson étanche (4), ledit système de commande effectuant une comparaison entre la variation de poids du récipient (1) et une valeur de consigne correspondant à une quantité prédéterminée de produit à prélever dans le récipient (1), et interrompant la mise sous pression du caisson étanche (14) lorsque la variation de poids du récipient (1) a atteint cette valeur de consigne.

3. Dispositif selon l'une quelconque des revendications 1 et 2, caractérisé par le fait que le caisson étanche (14) est ouvert à sa partie supérieure et que le fond(19) du caisson étanche (14) est solidaire d'un moyen de levage tel qu'un vérin pneumatique, apte à élever le fond (19) du caisson étanche (14) au voisinage de l'ouverture de ce dernier.

4. Dispositif selon l'une quelconque des revendications 1 à 3, caractérisé par le fait que le bouchon (4) est monté sur le récipient (1) avec un jeu axial de telle sorte que le bouchon (4) est libre de s'écarter légèrement du récipient (1) en libérant ainsi un passage d'air entre l'intérieur et l'extérieur du récipient (1).

5. Dispositif selon la revendication 4, caractérisé par le fait que le tube plongeur (12) repose sur le fond (1a) du récipient lorsque le bouchon (4) ferme le récipient (1) et est écarté du fond (1a) du récipient lorsque le bouchon (4) est écarté du récipient (1).

6. Dispositif selon l'une quelconque des revendications 1 à 5, caractérisé par le fait que le caisson étanche (14) est ouvert à sa partie supérieure et que le bouchon (4) est dimensionné de manière à refermer le caisson étanche (14) lorsqu'il est placé sur le récipient (1), ce dernier étant introduit dans ledit caisson étanche (14).

7. Dispositif selon la revendication 6, caractérisé par le fait que le caisson étanche (14) est dimensionné de manière à ce que le bouchon (4) s'écarte du récipient (1) en prenant appui sur le caisson étanche (14) lorsque le récipient (1) repose sur le fond du caisson étanche (14a).

## Claims

1. Device for storing a liquid or pasty product and for dispensing a metered quantity of this product, including at least one container (1), for containing the product, which is open at its upper end, a stopper (4) for closing the container (1), a plunger tube (12) passing through the stopper (4), immersed in the product and opening out outside the container (1), and a leaktight vessel (14) capable of receiving the container (1) with communication from the inside of the container (1) to the inside of the vessel (14), for subjecting the product to a pressure which is greater than the pressure prevailing outside the leaktight vessel so that the product can be removed without the product stored in the container (1) coming into contact with the outside, characterized in that the bottom (19) of the leaktight vessel (14) comprises a weighing member (19b, 21, 22) which measures the weight of the container (1) when the latter is placed in the leaktight vessel (14).

2. Device according to Claim 1, characterized in that the weighing member (19b, 21, 22) is connected to a control system of a means for pressurizing the leaktight vessel (4) , the said control system comparing the variation in weight of the container (1) with a reference value corresponding to a pre-metered quantity of product to be removed from the container (1) and interrupting the pressurization of the leaktight vessel (14) when the variation in weight of the container (1) has reached this reference value.

3. Device according to either of Claims 1 and 2, characterized in that the leaktight vessel (14) is open at its upper end and in that the bottom (19) of the leaktight vessel (14) is integral with a lifting means, such as a pneumatic ram, capable of raising the bottom (19) of the leaktight vessel (14) near the opening of the latter.

4. Device according to any one of Claims 1 to 3, characterized in that the stopper (4) is mounted on the container (1) with an axial clearance such that the stopper (4) is free to move away slightly from the container (1), thereby freeing an air passage between the inside and the outside of the container (1).

5. Device according to Claim 4, characterized in that the plunger tube (12) rests on the bottom (1a) of the container when the stopper (4) closes the container (1) and is separated from the bottom (1a) of the container when the stopper (4) is separated from the container (1).

6. Device according to any one of Claims 1 to 5, characterized in that the leaktight vessel (14) is open at its upper end and in that the stopper (4) is sized so as to close the leaktight vessel (14) when it is placed on the container (1), the latter being inserted into the said leaktight vessel (14).

7. Device according to Claim 6, characterized in that the leaktight vessel (14) is sized so that the stopper (4) is separated from the container (1) by bearing on the leaktight vessel (14) when the container (1) rests on the bottom of the leaktight vessel (14a).

## Patentansprüche

1. Vorrichtung zur Lagerung eines flüssigen oder pastösen Produkts und zur dosierten Abgabe dieses Produktes, mit mindestens einem Behälter (1) zur Aufnahme des Produktes, der an seinem oberen Teil offen ist, einem Stöpsel bzw. Deckel (4), um den Behälter (1) zu verschließen, einem Tauchrohr (12), das den Deckel (4) durchsetzt, in das Produkt eintaucht und auf der Außenseite des Behälters (1) mündet, und einem dichten Druckgefäß (14), das dazu eingerichtet ist, den Behälter (1) unter Verbindung der Innenseite des Behälters (1) mit der Innenseite des Druckgefäßes (14) aufzunehmen, um das Produkt einem Druck auszusetzen, der größer ist als der Druck, der auf der Außenseite des dichten Druckbehälters herrscht, und zwar derart, daß die Entnahme des Produkts bewirkt wird, ohne daß man das Produkt, das im Behälter gelagert ist, mit der Außenseite in Berührung bringt, dadurch gekennzeichnet, daß der Boden (19) des dichten Druckbehälters (14) ein Wiegeorgan (19b, 21,22) aufweist, das das Gewicht des Behälters (1) mißt, wenn dieser in den dichten Druckbehälter (14) eingesetzt ist.

2. Vorrichtung nach Anspruch 1, dadurch gekennzeichnet, daß das Wiegeorgan (19b, 21, 22) an ein Steuersystem einer Einrichtung zur Druckbeaufschlagung des dichten Druckbehälters (4) angeschlossen ist, wobei das genannte Steuersystem einen Vergleich zwischen der Gewichtsänderung des Behälters (1) und einem Einstellwert bewirkt, der einer bestimmten Produktmenge entspricht, die im Behälter (1) zu entnehmen ist, und die Druckbeaufschlagung des dichten Druckbehälters (14) unterbricht, wenn die Gewichtsänderung des Behälters (1) diesen Einstellwert erreicht hat.

3. Vorrichtung nach irgendeinem der Ansprüche 1 und 2, dadurch gekennzeichnet, daß der dichte Druckbehälter (14) an seinem oberen Teil offen ist, und daß der Boden (19) des dichten Druckbehälters (14) fest mit Hubmitteln wie etwa einem pneumatischen Zylinder verbunden ist, der dazu eingerichtet ist, den Boden (19) des dichten Druckbehälters (14) in der Nähe der Öffnung dieses letztgenannten anzuheben.

4. Vorrichtung nach irgendeinem der Ansprüche 1 bis 3, dadurch gekennzeichnet, daß der Deckel (4) auf dem Behälter (1) mit axialem Spiel derart angebracht ist, daß es dem Deckel (4) freisteht, leicht vom Behälter (1) abzuheben, wobei er so einen Luftdurchlaß zwischen der Innenseite und der Außenseite des Behälters (1) freisetzt.

5. Vorrichtung nach Anspruch 4, dadurch gekennzeichnet, daß das Tauchrohr (12) auf dem Boden (1a) des Behälters ruht, wenn der Deckel (4) den Behälter (1) verschließt, und vom Boden (1a) des Behälters abgehoben ist, wenn der Deckel (4) vom Behälter (1) abgehoben ist.

6. Vorrichtung nach irgendeinem der Ansprüche 1 bis 5, dadurch gekennzeichnet, daß der dichte Druckbehälter (14) an seinem oberen Teil offen ist, und daß der Deckel (4) derart bemessen ist, daß er den dichten Druckbehälter (14) wieder verschließt, wenn er auf den Behälter (1) aufgesetzt ist, wobei dieser letztgenannte in den genannten dichten Druckbehälter (14) eingeführt ist.

7. Vorrichtung nach Anspruch 6, dadurch gekennzeichnet, daß der dichte Druckbehälter (14) derart bemessen ist, daß der Deckel (4) vom Behälter (1) abhebt und dabei auf dem dichten Druckbehälter (14) aufsitzt, wenn der Behälter (1) auf dem Boden des dichten Druckbehälters (14a) ruht.
